# EUROPEAN PATENT APPLICATION

(11) **EP 3 648 024 A1**
(43) Date of publication of application: **06.05.2020**
(21) Application number: 19200167.5
(22) Date of filing: 27.09.2019
(51) Int. Cl.: G06Q 10/08

(54) **METHODS, DEVICES AND COMPUTER PROGRAM PRODUCTS FOR PROVIDING IMPROVED ESTIMATED TIMES OF ARRIVAL BY DETECTING AND CLASSIFYING WAYPOINTS**

(30) Priority: 05.11.2018 SE 1830322
(71) Applicant: Sony Mobile Communications Inc., Shinagawa-ku Tokyo 140-0002 (JP)
(72) Inventor: EXNER, Peter, 21752 Malmö (SE); JOHANSSON, Magnus, 22362 Lund (SE)
(74) Representative: Neij & Lindberg AB

(57) **Abstract**

Provided are devices, methods, and computer readable products for adjusting an estimated time of arrival for an object to arrive at a destination. Example aspects provide a method that includes determining the object is at an intermediate waypoint; determining place data related to a place that is proximate to the intermediate waypoint; calculating an adjustment based on the place data related to the place that is proximate to the intermediate waypoint; and adjusting the estimated time of arrival for the object based on the adjustment.

## Description

### Cross-Reference to Related Application

The present application claims priority to Swedish Patent Application No. 1830322-2, filed on November 5, 2018 with the Swedish Patent and Registration Office and entitled "METHODS, DEVICES AND COMPUTER PROGRAM PRODUCTS FOR PROVIDING IMPROVED ESTIMATED TIMES OF ARRIVAL BY DETECTING AND CLASSIFYING WAYPOINTS," the entire contents of which are hereby incorporated by reference for all purposes.

### Technical Field

Aspects of the present disclosure relate to tracking objects during transportation, and more particularly, to methods, devices and computer program products for providing improved estimated times of arrival of tracked objects by detecting and classifying waypoints.

### Background

Cargo, goods, and other objects are routinely transported domestically and/or internationally using various modes of transportation such as trucks, lorries, trains, ships, and/or airplanes. Modern transportation systems may include complex logistics spanning multiple modes of transportation and/or multiple transportation carriers. It is often the case that individuals and organizations desiring to transport cargo to other individuals or organizations utilize a domestic and/or international shipping or transporting service to take shipped articles from an origin and convey them to a destination. A shipping service may use one or more different vehicles to transport a cargo to its intended destination. In some situations, a first shipping service may convey the cargo to a second shipping service for further transportation towards the destination, especially in situations where the first shipping service does not operate in a particular area (e.g., nation, region, continent, or so on). For a growing number of organizations and individuals, shipping and transportation are increasing in both complexity and importance.

### Summary

A growing number of objects that are transported using shipping services are tracked and monitored during their transport. Although tracking and monitoring of an object as it is transported from its origin to its destination may be performed by the shipping service, tracking and monitoring may also be performed by the shipper and/or the recipient, or on behalf of the shipper and/or the recipient by a party other than the shipper, recipient, or shipping service.

The increasing complexity and importance of logistics management suggests that it is increasingly desirable that an estimated time of arrival for a transported article be not only available, but also have improved accuracy. This provides value both to the sender of the article and/or to the recipient. As examples, a sender may desire an estimated time of arrival for peace of mind, for contractual or legal reasons, and/or to determine whether alternative articles need to be transported to the recipient using an alternative method of shipping (e.g., courier delivery). A recipient may desire an accurate estimated time of arrival to ensure that custody of the article can be effectuated, e.g., so that the recipient or an agent thereof is available to receive the article from the shipping service. A recipient may also need accurate advance notice of a pending arrival to ensure that adequate space of the proper type is available at the destination. For example, a perishable foodstuff may require refrigeration, and a time of arrival with improved accuracy may be used to prepare space in a refrigerated area of the destination.

Aspects of the present disclosure recognize that existing methods for providing an accurate estimated time of arrival are inadequate. Knowledge of the origin, destination, and/or a route between the origin and destination does not provide adequate information to determine an accurate estimated time of arrival (even when average or instantaneous speed along the route is taken into account). The inventive concepts herein recognize that during transportation of an object, there may be one or more intermediate waypoints along the route at which progress towards the destination of the object is temporarily impeded.

For example, some intermediate waypoints are the result of a change in transportation modes and/or carriers, for example at a cargo terminal. An object may be transferred from a truck/lorry to an airplane for transit therein. Other intermediate waypoints arise because of political or legal reasons, such as customs, border crossings, vehicle inspections, weigh stations, and so on. Still further intermediate waypoints occur because of an operator (e.g., truck driver) of the vehicle; the operator may need to temporarily stop to eat, rest, comply with driving regulations, or for personal reasons. Herein, an intermediate waypoint includes any point or place on a route or line of travel at which a temporary cessation in the progress of an object from an origin of the object towards a destination of the object occurs. Aspects of the present disclosure further recognize that different types of intermediate waypoints may result in different amounts (e.g., different durations) of delay in the progress of the object. For example, a truck operator may need to rest or eat at a restaurant or refuel at a gas station. As another example, cargo may be moved at a cargo station, airport, or ferry terminal from a first vehicle to a second vehicle for further transportation. Each of these delays may impact the estimated time of arrival of the object by a different amount.

Cargo owners, transportation coordinators, and/or carriers need accurate information regarding the location of cargo during transport. The inventive concepts of the present disclosure result from the recognition of the need for techniques that efficiently and/or automatically provide improved estimated times of arrival for tracked objects in a transportation network.

One general aspect of the present disclosure includes a method for adjusting an estimated time of arrival for an object to arrive at a destination, the method including: determining the object is at an intermediate waypoint; determining place data related to a place that is proximate to the intermediate waypoint; calculating an adjustment based on the place data related to the place that is proximate to the intermediate waypoint; and adjusting the estimated time of arrival for the object based on the adjustment. Other embodiments of this aspect include corresponding computer systems, apparatus, and computer programs recorded on one or more computer storage devices, each configured to perform the actions of the methods.

Some embodiments or implementations may be based on further aspects of the present disclosure. One example of further aspects of the present disclosure is that determining the object is at the intermediate waypoint may include: receiving at least a first data point and a second data point, each associated with the object, where the first data point includes a first geolocation position and is associated with a first time, and where the second data point includes a second geolocation position and is associated with a second time; determining that a distance between the first geolocation position and the second geolocation position is less than a predetermined threshold distance; and determining that a duration between the first time and the second time is less than a predetermined threshold time. Determining a center position of a cluster of data points including the first data point and the second data point as the intermediate waypo int.

As another example of further aspects of the present disclosure, determining the place data related to the place that is proximate to the intermediate waypoint may include: determining that a place that is less than a predetermined distance from the intermediate waypoint exists in a place database; and retrieving place data from the place database that is related to the place that is less than the predetermined distance from the intermediate waypoint, where the place data includes a type associated with the place. Another example of further aspects of the present disclosure is that determining the place data related to the place that is proximate to the intermediate waypoint may include: determining that a place that is less than a predetermined distance from the intermediate waypoint does not exist in a place database; retrieving an image including the intermediate waypoint and an area surrounding the intermediate waypoint; detecting, using an image classifier, a place within the image, and detecting a type of the place detected within the image; and retrieving place data associated with the detected type of the place detected within the image.

In some embodiments, the image may be a satellite image. In some embodiments, the first data point and second data point may be received from a wireless communication device affixed to the object, where the wireless communication device includes a cellular transceiver. In some embodiments, calculating the adjustment based on the place data related to the place that is proximate to the intermediate waypoint includes calculating the adjustment based on operating hours of the place that is proximate to the intermediate waypoint.

Another general aspect of the present disclosure provides an electronic device that includes a processor, and memory storing non-transitory machine-readable instructions that, when executed by the processor, cause the processor to perform operations. Such operations may include determining an object is at an intermediate waypoint; determining place data related to a place that is proximate to the intermediate waypoint, calculating an adjustment based on the place data related to the place that is proximate to the intermediate waypoint, and adjusting an estimated time of arrival for the object based on the adjustment.

The memory may be further configured to cause the processor to perform further operations. For example, determining the object is at the intermediate waypoint may include: receiving at least a first data point and a second data point, each associated with the object, where the first data point includes a first geolocation position and is associated with a first time, and where the second data point includes a second geolocation position and is associated with a second time; determining that a distance between the first geolocation position and the second geolocation position is less than a predetermined threshold distance; and determining that a duration between the first time and the second time is less than a predetermined threshold time.

The memory may store further machine-readable instructions that, when executed by the processor, cause the processor to determine a center position of a cluster of data points including the first data point and the second data point as the intermediate waypoint. The electronic device may be configured to determine the place data related to the place that is proximate to the intermediate waypoint by performing operations comprising: determining that a place that is less than a predetermined distance from the intermediate waypoint exists in a place database; and retrieving place data from the place database that is related to the place that is less than the predetermined distance from the intermediate waypoint, where the place data includes a type associated with the place. The electronic device may be configured to determine the place data related to the place that is proximate to the intermediate waypoint by performing operations comprising: determining that a place that is less than a predetermined distance from the intermediate waypoint does not exist in a place database; retrieving an image including the intermediate waypoint and an area surrounding the intermediate waypoint; detecting, using an image classifier, a place within the image, and detecting a type of the place detected within the image; and retrieving place data associated with the detected type of the place detected within the image. The image may be a satellite image.

The first data point and second data point may be received by the electronic device from a wireless communication device affixed to the object, where the wireless communication device includes a cellular transceiver. In some embodiments, calculating the adjustment based on the place data related to the place that is proximate to the intermediate waypoint includes calculating the adjustment based on operating hours of the place that is proximate to the intermediate waypoint.

One general aspect of the present disclosure includes a method of determining place data related to a place that is proximate to an intermediate waypoint, where the intermediate waypoint is a geolocation at a center of a cluster of data points including at least two data points. The method may include: determining that a place that is less than a predetermined distance from the intermediate waypoint does not exist in a place database; retrieving an image including the intermediate waypoint and an area surrounding the intermediate waypoint; detecting, using an image classifier, a place within the image, and detecting a type of the place detected within the image; and retrieving place data associated with the detected type of the place detected within the image. Other embodiments of this aspect include corresponding computer systems, apparatus, and computer programs recorded on one or more computer storage devices, each configured to perform the actions of the methods. In some embodiments or implementations, the image may be a satellite image, and in some embodiments or implementations, the image classifier may be a trained image classifier.

### Brief Description of the Drawings

The inventive concepts will be more clearly understood in view of the detailed description and the accompanying drawings.
**Figure 1** illustrates an object or cargo that is being transported in a transportation system.
**Figure 2** illustrates an object tracking and monitoring system that includes a wireless electronic device used to track and monitor the progress of an object or cargo, and also includes a remote electronic device.
**Figures 3A-C** illustrate example aspects of the present disclosure, including intermediate waypoints detected along a route and an example of an intermediate waypoint.
**Figures 4-5** illustrate example methods of calculating an adjustment to an estimated time of arrival of the object or cargo at a destination, based on determining that the object is at an intermediate waypoint.
**Figure 6** illustrates example methods of training an image classifier, according to aspects of the present disclosure.
**Figure 7** is a block diagram of an electronic device capable of implementing the inventive concepts, according to various embodiments described herein.

### Detailed Description

Various embodiments will be described more fully hereinafter with reference to the accompanying drawings. Other embodiments may take many different forms and should not be construed as limited to the embodiments set forth herein. Like numbers refer to like elements throughout.

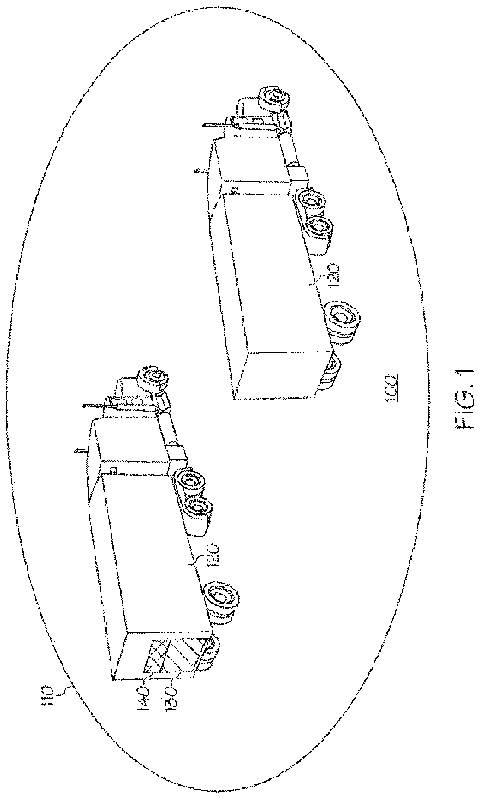

**Figure 1** illustrates an object or cargo that is being transported in a transportation system. Referring now to **Figure 1****,** a vehicle **120** (illustrated as a truck/lorry in **Figure 1****,** but not limited thereto) may be parked at an origin **100.** An object **130,** such as cargo or goods, may be loaded onto the vehicle **120.** In some aspects, a wireless electronic device **140** may be temporarily or permanently affixed to the object **130** prior to or concurrently with the loading of the object **130** onto the vehicle **120.** For example, the wireless electronic device **140** may be affixed to the object **130** as the object **130** is transported from an origin to a destination. The wireless electronic device **140** may therefore provide for tracking and/or monitoring of the object **130** as it is transported from the origin to the destination via one or more vehicles, such as the vehicle **120.** In some aspects, a single wireless electronic device **140** may provide tracking and/or monitoring of multiple objects **130** that are being transported from a common origin to a common destination, and in such aspects, the wireless electronic device may be affixed to only a subset (e.g., one) of the objects **130.**

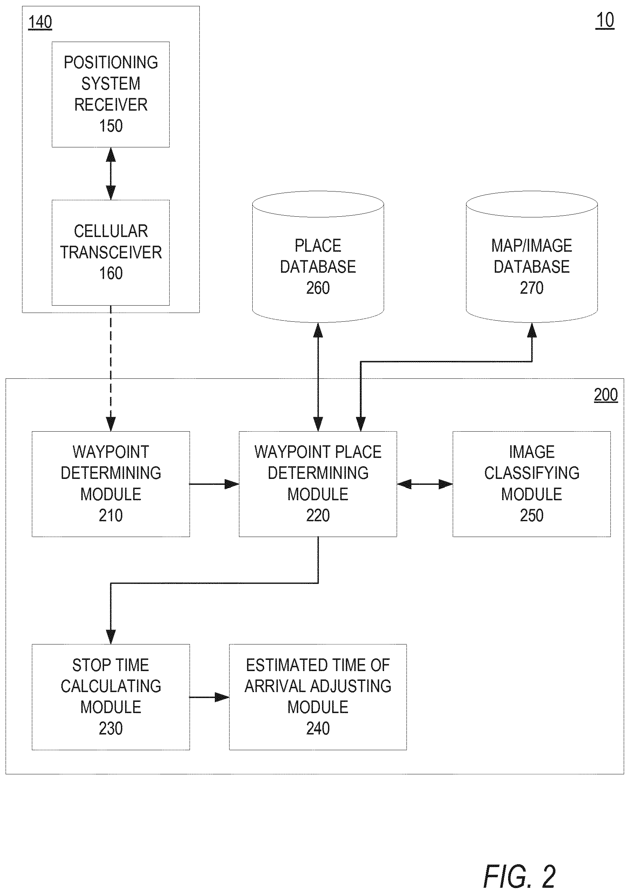

**Figure 2** illustrates example aspects of an object monitoring and tracking system **10,** which includes the wireless electronic device **140** of **Figure 1****,** a remote electronic device **200,** a place database **260,** and a map/image database **270.** As seen in **Figure 2****,** the wireless electronic device **140** of **Figure 1** may communicate with the remote electronic device **200** and/or components thereof. Although some embodiments of the object monitoring and tracking system **10** may include a communication path between the wireless electronic device **140** and the remote electronic device **200,** in some embodiments, the wireless electronic device **140** may not communicate with the remote electronic device, and may instead be configured to communicate with a not shown device or database, which is in turn configured to communicate with the electronic device. For example, data transmitted from the wireless electronic device **140** may be stored in a database (not shown) and retrieved from the database by the remote electronic device **200.** Further, although **Figure 2** shows that place database **260** and map/image database **270** are separate from the remote electronic device **200,** in some embodiments one or more than one of these databases may be a component of the remote electronic device **200.** Other components, links, devices, and so on may be present within the object monitoring and tracking system **10,** which are omitted from **Figure 2** and the description thereof in the interest of conciseness.

In some aspects, the wireless electronic device **140** may include a positioning system receiver **150** configured to determine a geolocation position of the wireless electronic device **140** using signals received from one or more positioning systems. In some aspects, the positioning system may include one or more global navigation satellite systems (GNSS), such as the Global Positioning System (GPS), GLONASS, Galileo, BDS, and so on. In some aspects, the positioning system may include regional navigation satellite systems, such as NAVIC or QZSS.

As the wireless electronic device **140** is temporarily or permanently affixed to the object **130,** the determined geolocation position of the wireless electronic device **140** may be essentially identical to the geolocation position of the object **130,** and is treated as such herein.

The wireless electronic device **140** may further include a cellular transceiver **160** that communicates with a cellular system. The wireless electronic device **140** may connect to the cellular system via the cellular transceiver **160,** and may transmit information from the positioning system receiver **150** to a remote electronic device **200** that is configured to receive the position of the object **130** and calculate an estimated time of arrival at a destination of the object **130.** In some aspects, the cellular transceiver **160** may be used in addition to, or alternatively to, the positioning system receiver **150.** For example the cellular transceiver **160** may obtain the position of one or more cellular base stations or access points that are nearby, and the wireless electronic device **140** and/or the remote electronic device **200** may use the positions to determine (e.g., triangulate) the geolocation position of the wireless electronic device **140.** As such, the positioning system receiver **150** may be optional in some embodiments. Cellular systems that provide information about locations of base stations and/or access points may be useful when the object **130** is in areas with poor satellite signals, such as in an airport or inside a cargo terminal.

One of skill in the art will recognize that other devices or components of the wireless electronic device **140,** such as a supply of operating power for the wireless electronic device **140** and the components thereof (e.g., a battery), a processor and memory configured to control operations of the wireless electronic device **140** and the components thereof, antennas to receive and/or transmit signals from the satellites of the positioning system, the equipment of the cellular system, and/or the remote electronic device **200,** as well as other devices or components, may be present within the wireless electronic device **140.** One of skill in the art will also recognize that in the interest of conciseness, such other devices and components need not be shown specifically in the Figures or discussed specifically in the present disclosure, as such other devices and components may operate in a manner consistent with the technical field.

In some aspects, the wireless electronic device **140** may determine a geolocation position of the wireless electronic device **140** using signals received from the positioning system and/or the cellular system, and may transmit the determined geolocation position to the remote electronic device **200** using the cellular system (e.g., using the cellular transceiver **160**). In some aspects, the wireless electronic device **140** may transmit signals indicative of those received by the wireless electronic device **140** from the positioning system and/or the cellular system to the remote electronic device **200.** The remote electronic device **200** may determine the geolocation position of the wireless electronic device **140** and the object **130** affixed thereto based on the received signals. The geolocation position of the wireless electronic device **140,** and a time (e.g., acquisition time, receipt time) associated therewith, may be stored by the remote electronic device **200** as a data point, for example in a database.

The object monitoring and tracking system **10** may include the place database **260,** which as discussed above may be a component of the remote electronic device **200,** or a separate component. The place database **260** may include information about waypoint places, including geolocations for each waypoint place (e.g., latitude and longitude coordinates), a waypoint type for each waypoint place (e.g., restaurant, cargo terminal, airport, and so on), and operating hours for each waypoint place (e.g., open 24 hours a day, open 9AM-5PM on weekdays, and so on).

The place database **260** may further include an expected delay time for each waypoint place (e.g., 20 minutes, one hour), which may be based on the waypoint type of the waypoint place and/or algorithmically determined. For example, an initial expected delay time may be determined for a waypoint place based on the waypoint type of the waypoint place, and as objects **130** are monitored and tracked using the object monitoring and tracking system **10** and determined to arrive at the waypoint place and remain at the waypoint place for periods of time, the initial expected delay time may be adjusted based on the periods of time (e.g., based on arithmetic mean of the periods of time, based on a median of the periods of time, based on a mode of the periods of time) and/or other factors, such as the time of arrival at the waypoint, which may have an influence on the length of the period of time.

A waypoint type may refer to a category, of which a waypoint place that is proximate to the intermediate waypoint is an example. For example, a waypoint place may be a specific cargo terminal (e.g., the "New River Cargo Terminal") located at a specific geolocation coordinate, and the waypoint type of the waypoint place may be a "Cargo Terminal." As another example, a waypoint place may be a specific restaurant (e.g., the "Hungry Trucker Restaurant") and the type of place may be "Restaurant." Waypoint types may have data and/or values associated therewith. For example, it may be known that an organization operates multiple "Hungry Trucker Restaurants," all of which are known to be open 24 hours a day, seven days a week. Each specific instance of a "Hungry Trucker Restaurant" in the place database **260** may be thus associated with a waypoint type that indicates such operating hours, while having different geolocation coordinates. Examples of such a waypoint type may include "Fast Food Restaurants," "Open 24 Hours," or even "Hungry Trucker Restaurants."

Data stored in the place database **260** may be initially populated and/or periodically updated with data received from another database and/or with data provided by a mapping service, such as GOOGLE Maps, OpenStreetMap, or so on. Elements stored in the place database **260** may be updated, for example, with data received from other databases, with data entered at the request of an operator of the place database **260,** and so on. As an example, operating hours of a waypoint place may be initially not set, and a flag may be set indicating that additional information about the waypoint place is desired and/or needed. Data related to the operating hours may be found and entered, and the flag may be cleared.

The object monitoring and tracking system **10** may include the map/image database **270,** which may be maintained by the operator of the object monitoring and tracking system **10,** and/or by a different individual or organization. The map/image database **270** may initially populated and/or periodically updated with data received from another database and/or with data provided by a mapping service such as GOOGLE Maps, OpenStreetMap, or so on. In some embodiments, the map/image database **270** may be accessed by the remote electronic device **200** or components thereof using a software development kit (SDK), application programming interface (API), one or more libraries, a web service protocol, or the like. The map/image database **270** may include mapping resources, a geolocation database, and images associated with geolocation coordinates. The images may include satellite images, street-level images, user-submitted images, and other images.

Embodiments of the present disclosure may be embodied in hardware and/or in software (including firmware, resident software, micro-code, etc.) that runs on a processor such as a digital signal processor, and portions of such hardware and/or software may be referred to as "circuitry," "a module," or variants thereof. Although the remote electronic device **200** is illustrated as a single electronic device having multiple modules therein, it is to be expected that in some embodiments, multiple electronic devices, each configured to execute a subset of the modules discussed herein, may be in operative communication with each other and collectively perform the functionality described herein. The remote electronic device may include a waypoint determining module **210,** a waypoint place determining module **220,** a stop time calculating module **230,** an estimated time of arrival adjusting module **240,** and an image classifying module **250** (which may be referred to herein as an image classifier).

The remote electronic device **200** may determine or receive an initial estimated time of arrival of the object **130** based on received indications of the origin of the object **130,** the destination of the object **130,** and/or a route between the origin and the destination of the object **130.** In some embodiments, the initial estimated time of arrival may be determined by an initial estimated time of arrival determining module (not shown in **Figure 2**). In some aspects, the remote electronic device **200** may retrieve a route between the origin and the destination from an Internet-based mapping service, such as GOOGLE Maps, OpenStreetMap, or so on, or from map/image database **270.**

As discussed herein, the remote electronic device **200,** and more specifically the waypoint determining module **210** thereof, may receive the geolocation position of the wireless electronic device **140** (i.e., the geolocation position of the object **130**) at a periodic interval and/or may determine the geolocation position of the wireless electronic device **140** at a periodic interval. As examples, the periodic interval may be once every hour, once every 10 minutes, once every 10 seconds, or once every second. Such intervals are examples, and the present disclosure is not limited thereto. The waypoint determining module **210** may be configured to determine that the wireless electronic device **140** is located at an intermediate waypoint based on the received geolocation positions of the wireless electronic device **140.** For example, the waypoint determining module **210** may determine that the wireless electronic device **140** is located at an intermediate waypoint based on determining that two or more received data points received from the wireless electronic device **140** are proximate to one another in geolocation and/time. Two or more proximate data points may be referred to herein as a cluster.

Proximity of data points may be based on one or more thresholds. For example, a first data point representing a first geolocation position associated with a first time, and a second data point representing a second geolocation position associated with a second time, may be determined to be proximate to one another if the first geolocation position is within a predetermined radius of the second geolocation position (e.g., a distance between the first geolocation position and the second geolocation position is less than or equal to a predetermined distance). However, in some embodiments, the first data point and the second data point may not be determined to be proximate to one another if the first time is too remote from the second time (e.g., a duration between the first time and the second time exceeds a predetermined threshold), even if the first geolocation position and the second geolocation position are within the predetermined threshold distance. Such data may indicate a different situation than that of the wireless electronic device **140** stopping at a place proximate to an intermediate waypoint, such as returning to a previous location because of mechanical breakdown of the vehicle **120,** road closure, or other situation. These situations may be handled appropriately, for example by the estimated time of arrival adjusting module **240.**

The waypoint place determining module **220** may determine a place that is proximate to the intermediate waypoint determined by the waypoint determining module **210,** and place data related to the place that is proximate to the intermediate waypoint. For example, the waypoint place determining module **220** may determine the place based on a center position of the cluster of data points found to be proximate by the waypoint determining module **210.** The center of the cluster of data points may be used to approximate a location of the wireless electronic device **140** and to avoid or curtail the effects of noise in the data points acquired by the remote electronic device **200.** Noise may result, for example, from minor positioning errors arising from the components of the wireless communication module. For example, the wireless electronic device **140** may transmit data points that are slightly different in geolocation coordinates, despite the wireless electronic device **140** actually being stationary.

The waypoint place determining module **220** may use the center position of the cluster of data points as a parameter to search the place database **260** and locate a place from the place database **260** that is nearest to the center position. If the distance between the nearest place retrieved from the place database and the center position of the cluster is less than or equal to a threshold, data associated with the place may be retrieved from the place database. This data may include, for example, the operating hours of the place, the expected delay associated with the place, the type of place, and other data associated with the place.

If the distance between the nearest place retrieved from the place database and the center position of the cluster is greater than a threshold, the waypoint place determining module may determine instead that the wireless electronic device **140** is located at an unknown place. Aspects of the present disclosure provide that the remote electronic device **200,** and the waypoint place determining module **220** may perform, or may cause to be performed, one or more operations to determine a waypoint type of the unknown place. As an example, an image that includes the center position of the cluster, and an area surrounding the center position of the cluster, may be retrieved from the map/image database **270.** The image may be a satellite image, a street level image, a user-submitted image, or the like. The image retrieved from the map/image database **270** may be received by the image classifying module **250,** which may perform one or more image classification techniques on the received image to determine objects therein. The image classification techniques may include trained or supervised classification that utilizes a training set of images and applies classifications to the retrieved image based on the training set of images. As an example, one or more images from the training set of images may indicate that an object is a cargo terminal, and the image classifying module **250** may identify a similarly shaped and/or similarly situated object in the image retrieved from the image/map database **270** as a cargo terminal (e.g., a place having a "Cargo Terminal" waypoint type). Data that is generic to the identified waypoint type may be retrieved from the place database **260.** In some embodiments, the generic data may omit, e.g., specific data related to the identified cargo terminal, restaurant, or other waypoint place, as such information may not be yet stored in the place database **260.**

In some embodiments, it may be determined by the waypoint place determining module **220** that the center position of the cluster of data points is on a road, rail, or other piece of infrastructure. Such situations may reflect a delay due to temporary traffic, road closure, or the like, and may not be indicative of a temporary stop at a place proximate to an intermediate waypoint. These situations may be handled appropriately, for example by the estimated time of arrival adjusting module **240.** As an example, the estimated time of arrival adjusting module **240** may receive traffic data or road closure data from an appropriate database and use such information to make an adjustment to the estimated time of arrival.

The place data retrieved from the place database **260** that is associated with the identified known place, and/or the waypoint type data that is retrieved based on the previously unknown place that has been identified by the image classifying module **250** may be communicated to the stop time calculating module **230.** The stop time calculating module **230** may calculate an estimated stop time of the object **130** at the intermediate waypoint based on the received data. For example, if operating hours of the identified place are known, such information may be used to calculate the estimated stop time. An object **130** may arrive at the intermediate waypoint outside of the operating hours of the place that is proximate to the intermediate waypoint, and as such the object may be delayed until at least the place next opens for business.

Additionally or alternatively, an estimated stop time may be determined based on a time of day and/or day of week at which the intermediate waypoint is detected, and/or based on a duration of transit of the object **130.** For example, an intermediate waypoint detected in an evening hours or overnight may indicate that a driver of the vehicle **120** that is transporting the object **130** may need to rest or sleep. In some jurisdictions, vehicle operators may only operate vehicles for a set duration before which a rest period is legally mandated. Accordingly, the stop time calculating module **230** may take into account a rest or sleep period. In some embodiments, such a period may be determined algorithmically from previous shipments or previously detected intermediate waypoints and the actual stop times thereof.

In some embodiments, the stop time calculating module **230** may take into account data received and/or retrieved from other sources. For example, an identified waypoint may be associated with an airport or ferry terminal, and scheduling data of aircraft or cargo ships leaving from the airport or ferry terminal may be used to calculate an estimated stop time.

The estimated time of arrival adjusting module **240** may adjust the estimated time of arrival of the object **130** at the destination thereof by adding the calculated stop time to a previously determined estimated time of arrival. In some embodiments, one or more notifications may be transmitted responsive thereto. For example, a notification may be transmitted to a sender and/or a recipient of the object **130.** In some embodiments, the estimated time of arrival adjusting module **240** may further revise the estimated time of arrival based on a determination that the object **130** is no longer at the waypoint (e.g., a data point is detected to be a predetermined distance away from the waypoint place.

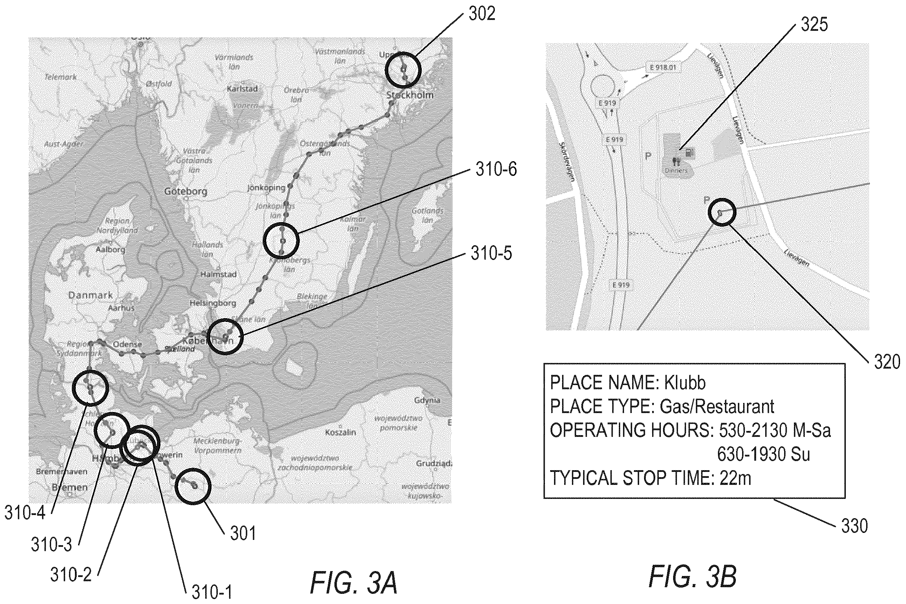

**Figure 3A** illustrates an example conveyance of an object (e.g., the object **130** of **Figure 1****)** from an origin **301** to a destination **302.** Along the route, several intermediate waypoints **310-1** to **310-6** are identified. Each intermediate waypoint **310-1** to **310-6** is determined, e.g., by the remote electronic device **200,** and more specifically the waypoint determining module **210** thereof. As discussed, each intermediate waypoint **310-1** to **310-6** may be determined based on the remote electronic device **200** receiving two or more geolocation coordinates from a wireless electronic device **140** that are proximate, e.g., spaced closely in distance and time.

**Figure 3B** illustrates an example determined intermediate waypoint **320**, which is similar to the intermediate waypoints of **Figure 3A****.** A place **325** that is proximate to the determined intermediate waypoint **320** may be determined by waypoint place determining module **220,** as discussed herein. For example, a center position of a cluster of data points may be used to search place database **260** for a place stored in the database that is proximate to the center position of the cluster. As shown in **Figure 3B****,** although the intermediate waypoint **320** is located in a parking lot of the place **325,** parking lots, curtilage, or ancillary locations may be considered in determining whether the determined intermediate waypoint **320** is proximate to the place **325.**

**Figure 3B** also illustrates example place data **330** from place database **260** associated with the determined place **325** that is proximate to the determined intermediate waypoint **320.** The data from the place database **260** indicates the place name, waypoint type, operating hours, and estimated stop time in Figure 3B, but these are examples and more or less data associated with the determined place **325** may be stored in the place database **260.** This information may be used by the stop time calculating module **230** to calculate a stop time. For example, if the stop at the intermediate waypoint begins at a time prior to the operating hours of the place, this information may be taken into account when calculating the stop time. Using the data from **Figure 3B** as an example, if the object **130** is detected to stop at the intermediate waypoint at 5:15AM on a Saturday, the stop time calculating module **230** may calculate the estimated stop time at 37 minutes (resulting from the sum of the typical stop time of 22 minutes and the 15 minutes between the current time and 5:30AM, the time that the gas station/restaurant place **325** that is proximate to the intermediate waypoint **320** opens for business).

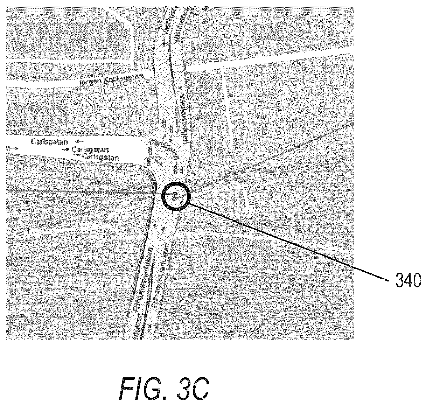

**Figure 3C** illustrates an example of a cluster of data points **340** occurring due to traffic along a road. This cluster may be indicated by the waypoint determining module **310** as an intermediate waypoint; however, the waypoint place determining module **220** may determine that the center position of the cluster is located on a road, rail, or other piece of infrastructure that indicates that the temporary cessation of movement of the object **130** is due to traffic, road closure, or another type of delay that is different from a stop at an intermediate waypoint. Accordingly the waypoint place determining module **220** may dismiss the cluster of data points **340** as an intermediate waypoint. The remote electronic device **200** may not adjust the estimated time of arrival of the object **130** at the destination, or may adjust the estimated time of arrival responsive to the determination of the traffic, the road closure, or the other type of delay.

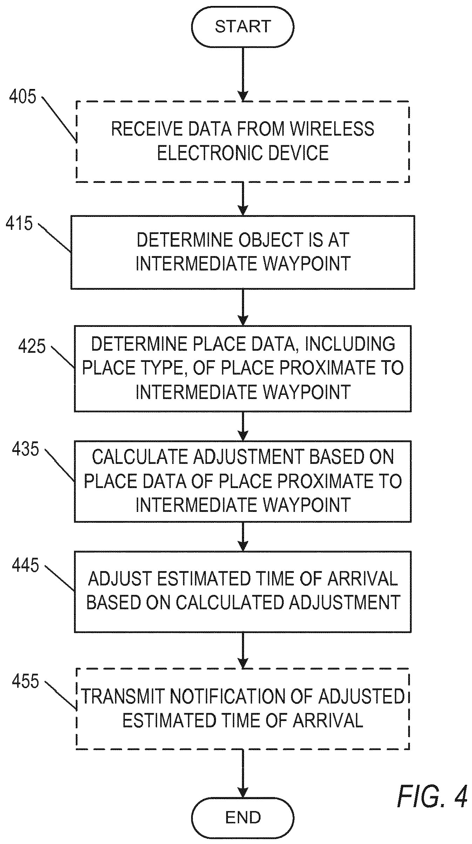

As described herein, as the object **130** transits from the origin to the destination, the remote electronic device **200** may calculate an adjustment to an initial estimated time of arrival of the object **130** at the destination, and the calculated adjustment may be based on determining that the object **130** is temporarily at an intermediate waypoint, and further based on an expectation that the object **130** may be at the intermediate waypoint for some determined length of time. Example methods of calculating an adjustment to the estimated time of arrival based on determining that the object **130** is at an intermediate waypoint are described herein with reference to **Figures 4-5****.**

**Figure 4** is a flowchart illustrating operations of methods to adjust an estimated time of arrival of an object **130.** In operation **415,** it may be determined that the object is at an intermediate waypoint. This determination may be based, for example, on a determination that two or more data points that include geolocation coordinates of the object are proximate in both distance and in time. A first data point may be proximate in distance to a second data point if they are within a predetermined distance to one another, and the first data point may be proximate in time to the second data point if they are within a predetermined duration to one another.

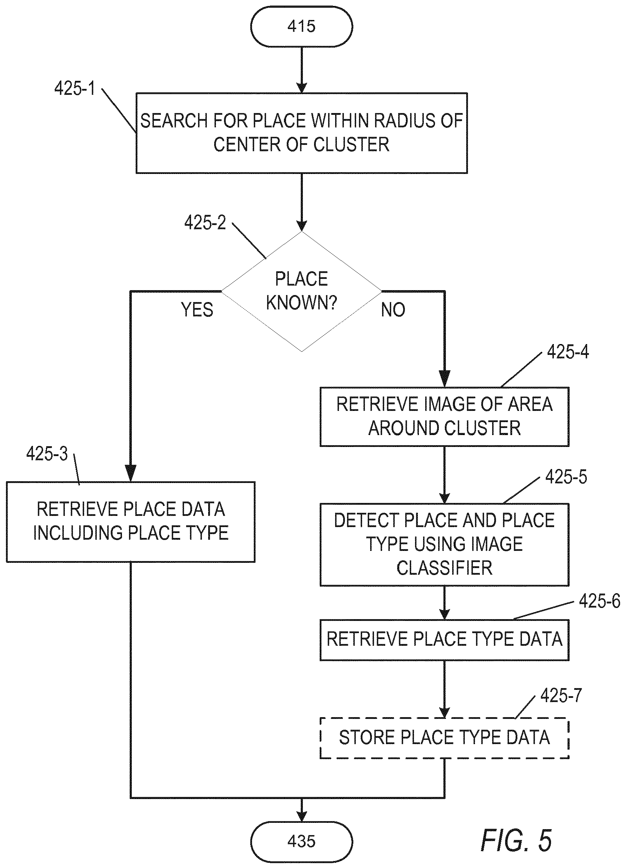

In operation **425,** place data related to a place that is proximate to the intermediate waypoint, including a type of place, at which the object **130** is located may be determined. According to aspects of the present disclosure, some possible techniques of determining data related to the place that is proximate to the intermediate waypoint, including the type of place, are discussed with reference to **Figure 5. Figure 5** illustrates some operations (e.g., sub-operations) that may be part of the methods illustrated by **Figure 4****,** and more specifically of operation **425** thereof. As seen in **Figure 5****,** determining data related to the place that is proximate to the intermediate waypoint, including the type of place, may proceed as follows. In operation **425-1,** the place database **260** may be searched using a center position of the cluster of data points to determine whether any places are known (e.g., the place database **260** is populated with data related to a place within a radius of the center position of the cluster). The center position of the cluster of data points may be determined based on an average, including a weighted average, of the coordinates of the data points, although other methods and techniques are within the scope of the present disclosure.

If a place is known ("Yes" branch from operation **425-2**), then data related to the known place may be retrieved, e.g., from the place database **260,** in operation **425-3.** If, however, the place is not known, that is, there is no place in the place database **260** within a predetermined radius or distance of the center position of the data points ("No" branch from operation **425-2**), then an image showing an area around and including the center position of the cluster of data points may be retrieved, e.g., from map/image database **270** in operation **425-4.** The image may be an aerial or satellite image, or may be a street-level image. The image may be passed to an image classifier, and a place, and a type of the place, may be detected using the image classifier in operation **425-5,** as discussed. Data that may be generic to the type of place may be retrieved, e.g., from the place database **260** in operation **425-6.** In some embodiments, an optional operation **425-7** may be performed, in which the generic waypoint place type data is stored in the place database **260** as associated with the center position of the cluster of data points. In such embodiments, if the place is encountered by a later object **130** being transported, the known place may be retrieved from the place database **260,** in lieu of using the image classification operations discussed. Additionally or alternatively, the waypoint place type data may be stored in the place database **260** with a flag indicating that additional information about the place type data may be required; for example, an operator or maintainer of the place database **260** may update the data associated with the place with more specific information concerning the place, such as operating hours.

Returning now to **Figure 4****,** in methods that use the operations of **Figure 5****,** either specific place data or generic place type data has been retrieved, according to the operations of **Figure 5****.** In operation **435,** based on the determined data related to the place that is proximate to the intermediate waypoint, including the type of place, an adjustment to the estimated time of arrival of the object at the destination may be calculated. As discussed, this adjustment may be based on, e.g., operating hours, previous delays, type of place, and/or other information. In operation **445,** an estimated time of arrival may be adjusted based on the calculated adjustment, for example, by adding the adjustment to a previously calculated or initialized estimated time of arrival.

In some embodiments, the methods illustrated in **Figure 4** may include optional operations, including an optional operation **405** in which data related to a geolocation position of the object **130** is received from a wireless electronic device **140.** Further, in some embodiments, the methods illustrated in **Figure 4** may include transmitting a notification of the adjusted time of arrival to one or more notification recipients, including a sender of the object **130** and/or a recipient of the object **130.**

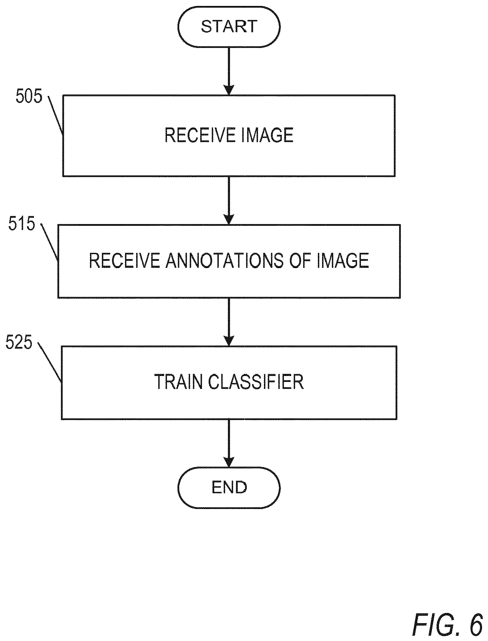

**Figure 6** illustrates example methods of training an image classifier (e.g., image classifying module **250**), according to aspects of the present disclosure. As illustrated in Figure 6, one or more training images or other images may be received in operation **505.** These images may be annotated in operation **515,** either by a human tasked with training the image classifier, and/or algorithmically, e.g., with data populated from one or more databases. In some embodiments, the image may also be annotated by pairing ain image with a successful lookup in the place database **260.** The annotated images may be used to train the classifier in operation **525.**

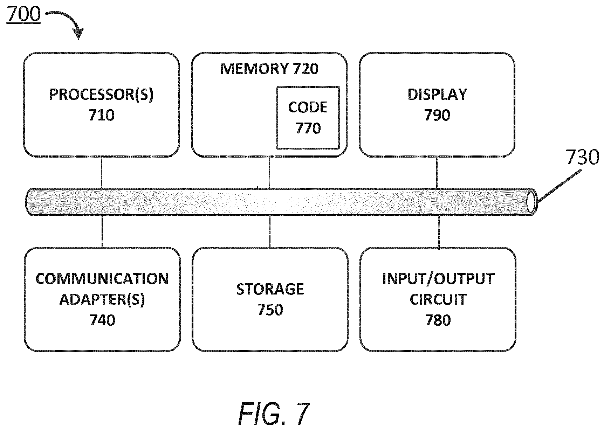

**Figure 7** is a block diagram of an electronic device **700,** which may be used to implement the inventive concepts (e.g., as remote electronic device **200**), according to various embodiments described herein. The electronic device **700** may use hardware, software implemented with hardware, firmware, tangible computer-readable storage media having instructions stored thereon and/or a combination thereof, and may be implemented in one or more computer systems or other processing systems. The electronic device **700** may also utilize a virtual instance of a computer. As such, the devices and methods described herein may be embodied in any combination of hardware and software.

As shown in **Figure 7****,** the electronic device **700** may include one or more processors **710** and memory **720** coupled to an interconnect **730.** The interconnect **730** may be an abstraction that represents any one or more separate physical buses, point to point connections, or both connected by appropriate bridges, adapters, or controllers. The interconnect **730,** therefore, may include, for example, a system bus, a Peripheral Component Interconnect (PCI) bus or PCI-Express bus, a HyperTransport or industry standard architecture (ISA) bus, a small computer system interface (SCSI) bus, a universal serial bus (USB), IIC (I2C) bus, or an Institute of Electrical and Electronics Engineers (IEEE) standard 1394 bus, also called "Firewire."

The processor(s) **710** may be, or may include, one or more programmable general purpose or special-purpose microprocessors, digital signal processors (DSPs), programmable controllers, application specific integrated circuits (ASICs), programmable logic devices (PLDs), field-programmable gate arrays (FPGAs), trusted platform modules (TPMs), or a combination of such or similar devices, which may be collocated or distributed across one or more data networks. The processor(s) **710** may be configured to execute computer program instructions from the memory **720** to perform some or all of the operations for one or more of the embodiments disclosed herein.

The electronic device **700** may also include one or more communication adapters **740** that may communicate with other communication devices and/or one or more networks, including any conventional, public and/or private, real and/or virtual, wired and/or wireless network, including the Internet. The communication adapters **740** may include a communication interface and may be used to transfer information in the form of signals between the electronic device **700** and another computer system or a network (e.g., the Internet). The communication adapters **740** may include a modem, a network interface (such as an Ethernet card), a wireless interface, a radio interface, a communications port, a PCMCIA slot and card, or the like. These components may be conventional components, such as those used in many conventional computing devices, and their functionality, with respect to conventional operations, is generally known to those skilled in the art. In some embodiments, the communication adapters **740** may be used to transmit and/or receive data associated with the embodiments for creating the mesh representation described herein.

The electronic device **700** may further include memory **720** which may contain program code **770** configured to execute operations associated with the embodiments described herein. The memory **720** may include removable and/or fixed non-volatile memory devices (such as but not limited to a hard disk drive, flash memory, and/or like devices that may store computer program instructions and data on computer-readable media), volatile memory devices (such as but not limited to random access memory), as well as virtual storage (such as but not limited to a RAM disk). The memory **720** may also include systems and/or devices used for storage of the electronic device **700.**

The electronic device **700** may also include one or more input device(s) such as, but not limited to, a mouse, keyboard, camera, and/or a microphone connected to an input/output circuit **780.** The input device(s) may be accessible to the one or more processors **710** via the system interconnect **730** and may be operated by the program code **770** resident in the memory **720**

The electronic device **700** may also include a display **790** capable of generating a display image, graphical user interface, and/or visual alert. The display **790** may be accessible to the processor **710** via the system interconnect **730.** The display **790** may provide graphical user interfaces for receiving input, displaying intermediate operations/data, and/or exporting output of the embodiments described herein.

The electronic device **700** may also include a storage repository **750.** The storage repository **750** may be accessible to the processor(s) **710** via the system interconnect **730** and may additionally store information associated with the electronic device **700.** For example, in some embodiments, the storage repository **750** may contain mesh representations, object data and/or point cloud data as described herein. Though illustrated as separate elements, it will be understood that the storage repository **750** and the memory **720** may be collocated. That is to say that the memory **720** may be formed from part of the storage repository **750.**

As discussed, one general aspect of the present disclosure includes a method for adjusting an estimated time of arrival for an object to arrive at a destination, the method including: determining the object is at an intermediate waypoint; determining place data related to a place that is proximate to the intermediate waypoint; calculating an adjustment based on the place data related to the place that is proximate to the intermediate waypoint; and adjusting the estimated time of arrival for the object based on the adjustment. Other embodiments of this aspect include corresponding computer systems, apparatus, and computer programs recorded on one or more computer storage devices, each configured to perform the actions of the methods.

Some embodiments or implementations may be based on further aspects of the present disclosure. One example of further aspects of the present disclosure is that determining the object is at the intermediate waypoint may include: receiving at least a first data point and a second data point, each associated with the object, where the first data point includes a first geolocation position and is associated with a first time, and where the second data point includes a second geolocation position and is associated with a second time; determining that a distance between the first geolocation position and the second geolocation position is less than a predetermined threshold distance; and determining that a duration between the first time and the second time is less than a predetermined threshold time. Determining a center position of a cluster of data points including the first data point and the second data point as the intermediate waypo int.

As another example of further aspects of the present disclosure, determining the place data related to the place that is proximate to the intermediate waypoint may include: determining that a place that is less than a predetermined distance from the intermediate waypoint exists in a place database; and retrieving place data from the place database that is related to the place that is less than the predetermined distance from the intermediate waypoint, where the place data includes a type associated with the place. Another example of further aspects of the present disclosure is that determining the place data related to the place that is proximate to the intermediate waypoint may include: determining that a place that is less than a predetermined distance from the intermediate waypoint does not exist in a place database; retrieving an image including the intermediate waypoint and an area surrounding the intermediate waypoint; detecting, using an image classifier, a place within the image, and detecting a type of the place detected within the image; and retrieving place data associated with the detected type of the place detected within the image.

In some embodiments, the image may be a satellite image. In some embodiments, the first data point and second data point may be received from a wireless communication device affixed to the object, where the wireless communication device includes a cellular transceiver. In some embodiments, calculating the adjustment based on the place data related to the place that is proximate to the intermediate waypoint includes calculating the adjustment based on operating hours of the place that is proximate to the intermediate waypoint.

Another general aspect provided by the present disclosure provides an electronic device that includes a processor, and memory storing non-transitory machine-readable instructions that, when executed by the processor, cause the processor to perform operations. Such operations may include determining an object is at an intermediate waypoint; determining place data related to a place that is proximate to the intermediate waypoint, calculating an adjustment based on the place data related to the place that is proximate to the intermediate waypoint, and adjusting an estimated time of arrival for the object based on the adjustment.

The memory may be further configured to cause the processor to perform further operations. For example, determining the object is at the intermediate waypoint may include: receiving at least a first data point and a second data point, each associated with the object, where the first data point includes a first geolocation position and is associated with a first time, and where the second data point includes a second geolocation position and is associated with a second time; determining that a distance between the first geolocation position and the second geolocation position is less than a predetermined threshold distance; and determining that a duration between the first time and the second time is less than a predetermined threshold time.

The memory may store further machine-readable instructions that, when executed by the processor, cause the processor to determine a center position of a cluster of data points including the first data point and the second data point as the intermediate waypoint. The electronic device may be configured to determine the place data related to the place that is proximate to the intermediate waypoint by performing operations comprising: determining that a place that is less than a predetermined distance from the intermediate waypoint exists in a place database; and retrieving place data from the place database that is related to the place that is less than the predetermined distance from the intermediate waypoint, where the place data includes a type associated with the place. The electronic device may be configured to determine the place data related to the place that is proximate to the intermediate waypoint by performing operations comprising: determining that a place that is less than a predetermined distance from the intermediate waypoint does not exist in a place database; retrieving an image including the intermediate waypoint and an area surrounding the intermediate waypoint; detecting, using an image classifier, a place within the image, and detecting a type of the place detected within the image; and retrieving place data associated with the detected type of the place detected within the image. The image may be a satellite image.

The first data point and second data point may be received by the electronic device from a wireless communication device affixed to the object, where the wireless communication device includes a cellular transceiver. In some embodiments, calculating the adjustment based on the place data related to the place that is proximate to the intermediate waypoint includes calculating the adjustment based on operating hours of the place that is proximate to the intermediate waypoint.

Another general aspect of the present disclosure provides a method of determining place data related to a place that is proximate to an intermediate waypoint, where the intermediate waypoint is a geolocation at a center of a cluster of data points including at least two data points. The method may include: determining that a place that is less than a predetermined distance from the intermediate waypoint does not exist in a place database; retrieving an image including the intermediate waypoint and an area surrounding the intermediate waypoint; detecting, using an image classifier, a place within the image, and detecting a type of the place detected within the image; and retrieving place data associated with the detected type of the place detected within the image. Other embodiments of this aspect include corresponding computer systems, apparatus, and computer programs recorded on one or more computer storage devices, each configured to perform the actions of the methods. In some embodiments or implementations, the image may be a satellite image, and in some embodiments or implementations, the image classifier may be a trained image classifier.

The description of various examples of embodiments are provided herein with the understanding that the terminology used herein is for the purpose of describing particular embodiments only and is not intended to be limiting of the inventive concepts. Unless otherwise defined, all terms (including technical and scientific terms) used herein have the same meaning as commonly understood by one of ordinary skill in the art to which this disclosure belongs. It will be further understood that terms, such as those defined in commonly used dictionaries, should be interpreted as having a meaning that is consistent with their meaning in the context of this specification and the relevant art, and will not be interpreted in an idealized or overly formal sense unless expressly so defined herein.

When an element is referred to as being "connected", "coupled", "responsive", or variants thereof to another element, it can be directly connected, coupled, or responsive to the other element or intervening elements may be present. In contrast, when an element is referred to as being "directly connected", "directly coupled", "directly responsive", or variants thereof to another element, there are no intervening elements present. Furthermore, "coupled", "connected", "responsive", or variants thereof as used herein may include wirelessly coupled, connected, or responsive.

Like numbers refer to like elements throughout. As used herein, the singular forms "a", "an" and "the" are intended to include the plural forms as well, unless the context clearly indicates otherwise. Well-known functions or constructions may not be described in detail for brevity and/or clarity. The term "and/or" includes any and all combinations of one or more of the associated listed items.

As used herein, the terms "comprise", "comprising", "comprises", "include", "including", "includes", "have", "has", "having", or variants thereof are open-ended, and include one or more stated features, integers, elements, steps, components or functions but does not preclude the presence or addition of one or more other features, integers, elements, steps, components, functions or groups thereof.

Some examples of embodiments are described herein with reference to block diagrams and/or flowchart illustrations of computer-implemented methods, apparatus (systems and/or devices) and/or computer program products. It is to be understood that a block of the block diagrams and/or flowchart illustrations, and combinations of blocks in the block diagrams and/or flowchart illustrations, can be implemented by computer program instructions that are performed by one or more computer circuits. These computer program instructions may be provided to a processor circuit of a general purpose computer circuit, special purpose computer circuit, and/or other programmable data processing circuit to produce a machine, such that the instructions, which execute via the processor of the computer and/or other programmable data processing apparatus, transform and control transistors, values stored in memory locations, and other hardware components within such circuitry to implement the functions/acts specified in the block diagrams and/or flowchart block or blocks, and thereby create means (functionality) and/or structure for implementing the functions/acts specified in the block diagrams and/or flowchart block(s).

These computer program instructions may also be stored in a tangible computer-readable medium that can direct a computer or other programmable data processing apparatus to function in a particular manner, such that the instructions stored in the computer-readable medium produce an article of manufacture including instructions which implement the functions/acts specified in the block diagrams and/or flowchart block or blocks.

A tangible, non-transitory computer-readable medium may include an electronic, magnetic, optical, electromagnetic, or semiconductor data storage system, apparatus, or device. More specific examples of the computer-readable medium would include the following: a portable computer diskette, a random access memory (RAM) circuit, a read-only memory (ROM) circuit, an erasable programmable read-only memory (EPROM or Flash memory) circuit, a portable compact disc read-only memory (CD-ROM), and a portable digital video disc read-only memory (DVD/BluRay).

The computer program instructions may also be loaded onto a computer and/or other programmable data processing apparatus to cause a series of operational steps to be performed on the computer and/or other programmable apparatus to produce a computer-implemented process such that the instructions which execute on the computer or other programmable apparatus provide steps for implementing the functions/acts specified in the block diagrams and/or flowchart block or blocks. As discussed, embodiments of the present disclosure may be embodied in hardware and/or in software (including firmware, resident software, micro-code, etc.) that runs on a processor such as a digital signal processor, and portions of such hardware and/or software may be referred to as "circuitry," "a module" or variants thereof.

Aspects of the present disclosure are described herein with reference to flowchart illustrations and/or block diagrams of methods, apparatus (systems), and computer program products according to embodiments of the disclosure. It will be understood that each block of the flowchart illustrations and/or block diagrams, and combinations of blocks in the flowchart illustrations and/or block diagrams, can be implemented by computer program instructions. These computer program instructions may be provided to a processor of a general purpose computer, special purpose computer, or other programmable data processing apparatus to produce a machine, such that the instructions, which execute via the processor of the computer or other programmable instruction execution apparatus, create a mechanism for implementing the functions/acts specified in the flowchart and/or block diagram block or blocks.

These computer program instructions may also be stored in a computer readable medium that when executed can direct a computer, other programmable data processing apparatus, or other devices to function in a particular manner, such that the instructions when stored in the computer readable medium produce an article of manufacture including instructions which when executed, cause a computer to implement the function/act specified in the flowchart and/or block diagram block or blocks. The computer program instructions may also be loaded onto a computer, other programmable instruction execution apparatus, or other devices to cause a series of operational steps to be performed on the computer, other programmable apparatuses or other devices to produce a computer implemented process such that the instructions which execute on the computer or other programmable apparatus provide processes for implementing the functions/acts specified in the flowchart and/or block diagram block or blocks.

The flowchart and block diagrams in the figures illustrate the architecture, functionality, and operation of possible implementations of systems, methods, and computer program products according to various aspects of the present disclosure. In this regard, each block in the flowchart or block diagrams may represent a module, segment, or portion of code, which comprises one or more executable instructions for implementing the specified logical function(s). It should also be noted that, in some alternative implementations, the functions noted in the block may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts, or combinations of special purpose hardware and computer instructions.

It should also be noted that in some alternate implementations, the functions/acts noted in the blocks may occur out of the order noted in the flowcharts. For example, two blocks shown in succession may in fact be executed substantially concurrently or the blocks may sometimes be executed in the reverse order, depending upon the functionality/acts involved. Moreover, the functionality of a given block of the flowcharts and/or block diagrams may be separated into multiple blocks and/or the functionality of two or more blocks of the flowcharts and/or block diagrams may be at least partially integrated. Finally, other blocks may be added/inserted between the blocks that are illustrated. Moreover, although some of the diagrams include arrows on communication paths to show a primary direction of communication, it is to be understood that communication may occur in the opposite direction to the depicted arrows.

Many different embodiments have been disclosed herein, in connection with the above description and the drawings. It will be understood that it would be unduly repetitious and obfuscating to literally describe and illustrate every combination and subcombination of these embodiments. Accordingly, the present specification, including the drawings, shall be construed to constitute a complete written description of various example combinations and subcombinations of embodiments and of the manner and process of making and using them, and shall support claims to any such combination or subcombination. Many variations and modifications can be made to the embodiments without substantially departing from the principles described herein. All such variations and modifications are intended to be included herein within the scope.

## Claims

1. A method for adjusting an estimated time of arrival for an object (130) to arrive at a destination, the method comprising:
determining (415) the object is at an intermediate waypoint (320);
determining (425) place data (330) related to a place (325) that is proximate to the intermediate waypoint;
calculating (435) an adjustment based on the place data (330) related to the place that is proximate to the intermediate waypoint; and
adjusting (445) the estimated time of arrival for the object based on the adjustment, wherein determining the object is at the intermediate waypoint comprises:
receiving at least a first data point and a second data point, each associated with the object, wherein the first data point comprises a first geolocation position and is associated with a first time, and wherein the second data point comprises a second geolocation position and is associated with a second time;
determining that a distance between the first geolocation position and the second geolocation position is less than a predetermined threshold distance; and
determining that a duration between the first time and the second time is less than a predetermined threshold time.

2. The method of Claim 1, further comprising:
determining a center position of a cluster of data points comprising the first data point and the second data point as the intermediate waypoint.

3. The method of Claim 1, wherein determining the place data related to the place that is proximate to the intermediate waypoint comprises:
determining (425-1, 425-2) that a place that is less than a predetermined distance from the intermediate waypoint exists in a place database (260); and
retrieving place data from the place database (260) that is related to the place that is less than the predetermined distance from the intermediate waypoint, wherein the place data comprises a type associated with the place.

4. The method of Claim 1, wherein determining the place data related to the place that is proximate to the intermediate waypoint comprises:
determining (425-1, 425-2) that a place that is less than a predetermined distance from the intermediate waypoint does not exist in a place database (260);
retrieving (425-4) an image comprising the intermediate waypoint and an area surrounding the intermediate waypoint;
detecting (425-5), using an image classifier, a place within the image, and detecting a type of the place detected within the image; and
retrieving (425-6) place data associated with the detected type of the place detected within the image.

5. The method of Claim 4, wherein the image is a satellite image.

6. The method of Claim 1, wherein the first data point and second data point are received from a wireless communication device affixed to the object, wherein the wireless communication device comprises a cellular transceiver (160).

7. The method of Claim 1, wherein calculating the adjustment based on the place data (330) related to the place that is proximate to the intermediate waypoint comprises calculating the adjustment based on operating hours of the place that is proximate to the intermediate waypoint and/or a time of arrival of the object at the waypoint.

8. An electronic device (200) comprising:
a processor (710); and
memory (720) storing non-transitory machine-readable instructions that, when executed by the processor, cause the processor to perform operations comprising:
determining (415) an object (130) is at an intermediate waypoint (320);
determining (425) place data (330) related to a place (325) that is proximate to the intermediate waypoint;
calculating (435) an adjustment based on the place data (330) related to the place that is proximate to the intermediate waypoint; and
adjusting (445) an estimated time of arrival for the object based on the adjustment.

9. The electronic device of Claim 8, wherein determining the object is at the intermediate waypoint comprises:
receiving at least a first data point and a second data point, each associated with the object, wherein the first data point comprises a first geolocation position and is associated with a first time, and wherein the second data point comprises a second geolocation position and is associated with a second time;
determining that a distance between the first geolocation position and the second geolocation position is less than a predetermined threshold distance; and
determining that a duration between the first time and the second time is less than a predetermined threshold time.

10. The electronic device of Claim 9, wherein the memory stores further machine-readable instructions that, when executed by the processor, cause the processor to determine a center position of a cluster of data points comprising the first data point and the second data point as the intermediate waypoint.

11. The electronic device of Claim 9, wherein determining the place data related to the place that is proximate to the intermediate waypoint comprises:
determining (425-1, 425-2) that a place that is less than a predetermined distance from the intermediate waypoint exists in a place database (260); and
retrieving place data from the place database (260) that is related to the place that is less than the predetermined distance from the intermediate waypoint, wherein the place data comprises a type associated with the place.

12. The electronic device of Claim 9, wherein determining the place data related to the place that is proximate to the intermediate waypoint comprises:
determining (425-1, 425-2) that a place that is less than a predetermined distance from the intermediate waypoint does not exist in a place database (260);
retrieving (425-4) an image comprising the intermediate waypoint and an area surrounding the intermediate waypoint;
detecting (425-5), using an image classifier, a place within the image, and detecting a type of the place detected within the image; and
retrieving (425-6) place data associated with the detected type of the place detected within the image.

13. The electronic device of Claim 12, wherein the image is a satellite image.

14. The electronic device of Claim 9, wherein the first data point and second data point are received from a wireless communication device affixed to the object, wherein the wireless communication device comprises a cellular transceiver (160).

15. The electronic device of Claim 9, wherein calculating the adjustment based on the place data (330) related to the place that is proximate to the intermediate waypoint comprises calculating the adjustment based on operating hours of the place that is proximate to the intermediate waypoint.
